# EUROPEAN PATENT APPLICATION

(11) **EP 4 582 282 A1**
(43) Date of publication of application: **09.07.2025**
(21) Application number: 24222482.2
(22) Date of filing: 20.12.2024
(51) Int. Cl.: B60K 35/234, G02B 27/00, G02B 27/28, G02B 27/01, G02C 7/12

(54) **VEHICLE SYSTEM FOR DETECTING POLARIZED SUNGLASSES**

(30) Priority: 02.01.2024 US 202418402010
(71) Applicant: Harman International Industries, Incorporated, Stamford, Connecticut 06901 (US)
(72) Inventor: YANG, Roger, Berkley, Michigan, 48072 (US)
(74) Representative: Kraus & Lederer PartGmbB

(57) **Abstract**

A system for a vehicle includes a display configured to provide a plurality of vehicle operating parameters for a vehicle user; a camera configured to capture an image indicative of the vehicle user having eye wear positioned on a face of the vehicle user; and a controller programmed to, adjust an operating characteristic of the display based on at least the vehicle user wearing the eye wear.

## Description

### TECHNICAL FIELD

The present disclosure generally relates to a vehicle system for detecting polarized sunglasses worn by a vehicle user. More specifically, the present disclosure relates to a vehicle system for performing reactive operations responsive to detecting a vehicle user is wearing sunglasses to increase visibility of instrument display from the perspective of the vehicle user.

### BACKGROUND

Many vehicle users wear sunglasses while driving to reduce undesirable glare perceived by the vehicle user's eyes. While traditional sunglasses lenses are made of tinted glasses, polarized sunglasses have become increasingly popular. Polarized sunglasses apply a polarizer to filter out light waves oscillating in certain given direction while letting light waves oscillating in other directions through. In general, most sunglasses in the market uses vertical polarizers to filter out horizontally oriented light (e.g., S-wave) and allow vertically oriented light (e.g., P-wave) to pass through the lens unaffected (or affected in a lesser degree).

While the polarized sunglasses effectively filter out undesirable S-wave glares, such polarized sunglass may also inadvertently filter out some instrument information displayed in the S- wave direction. More particularly, many vehicles are equipped with a head-up display (HUD) to project optical images onto the front windshield of the vehicles. The HUD image may be projected as both the P-wave in the vertical direction and S-wave in the horizontal direction. If the S-wave image is filtered out by the polarized sunglasses and the P-wave image is displayed in a low brightness, the vehicle user may be unable to see the image clearly as the image may be very dim from the perspective of the vehicle user's eyes while wearing the polarized sunglasses.

### SUMMARY

A system for a vehicle includes a display configured to provide a plurality of vehicle operating parameters for a vehicle user; a camera configured to capture an image indicative of the vehicle user having eye wear positioned on a face of the vehicle user; and a controller programmed to adjust an operating characteristic of the display based on at least the vehicle user wearing the eye wear.

A method for a vehicle system includes outputting, via a display, a plurality of vehicle operating parameters for a user; capturing, via a camera, an image indicative of the user having a polarized eye wear positioned on a face of the user; and adjusting, via a controller, an operating characteristic of the display based on at least the user wearing the polarized eye wear.

An apparatus includes a camera configured to capture an image indicative of a face of a user; and a controller programmed to communicate with a display, and responsive to the image being indicative of the user is wearing a polarized eye wear, adjust an operating characteristic of the display.

### BRIEF DESCRIPTION OF THE DRAWINGS

For a better understanding of the embodiments and to show how it may be performed, embodiments thereof will now be described, by way of non-limiting example only, with reference to the accompanying drawings, in which:
Figure 1 illustrates an example block topology of a vehicle system of one or more embodiments of the present disclosure;
Figure 2 illustrates an example flow diagram of a process for detecting polarized sunglasses worn by the vehicle user of one or more embodiments of the present disclosure;
Figures 3A-3C illustrate example diagrams of an image perceived by the camera at different polarization directions of one or more embodiments of the present disclosure; and
Figures 4A-4C illustrate example diagrams of a polarizer motion mechanism of various embodiments of the present disclosure.

### DETAILED DESCRIPTION

Embodiments are described herein. It is to be understood, however, that the disclosed embodiments are merely examples and other embodiments may take various and alternative forms. The figures are not necessarily to scale. Some features could be exaggerated or minimized to show details of particular components. Therefore, specific structural and functional details disclosed herein are not to be interpreted as limiting, but merely as a representative basis for teaching one skilled in the art.

Various features illustrated and described with reference to any one of the figures may be combined with features illustrated in one or more other figures to produce embodiments that are not explicitly illustrated or described. The combinations of features illustrated provide representative embodiments for typical applications. Various combinations and modifications of the features consistent with the teachings of this disclosure, however, could be desired for particular applications or implementations.

The present disclosure proposes, among other things, a vehicle system for detecting polarized sunglasses worn by a driver and/or vehicle user. More specifically, the present disclosure proposes a vehicle system for performing operations to increase visibility of an instrument display responsive to detecting a vehicle driver and/or vehicle user is wearing sunglasses.

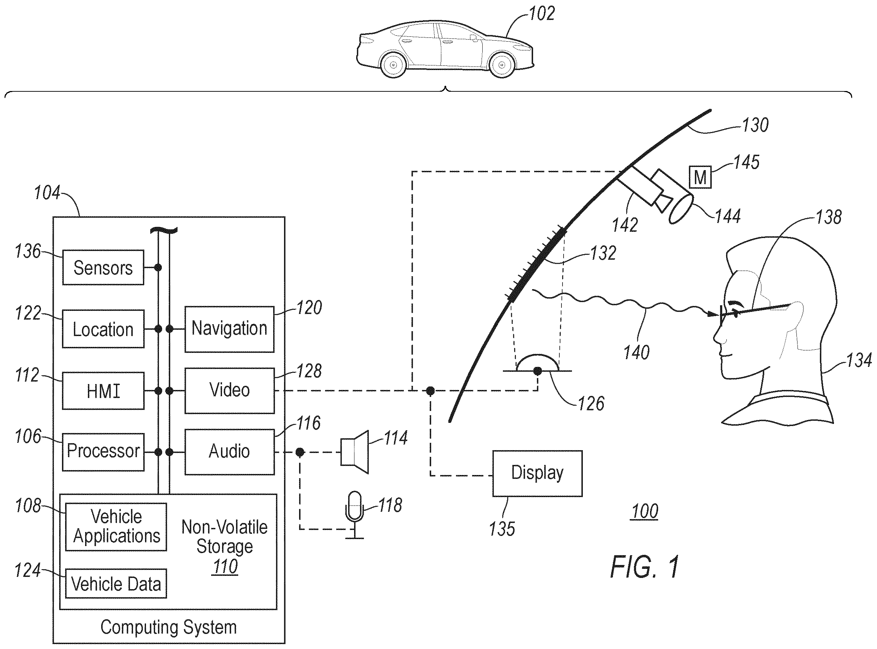

Referring to Figure 1, an example block topology of a vehicle system 100 of one or more embodiments of the present disclosure is illustrated. The vehicle system 100 may include a vehicle 102 provided with various hardware and software and configured to perform the various operations as disclosed herein. For instance, the vehicle 102 may include various types of automobiles such as crossover utility vehicle (CUV), sport utility vehicle (SUV), sedans, coupe, truck, recreational vehicle (RV), boat, plane, or other mobile machine designed for transportation purposes. The vehicle 102 may be powered by an internal combustion engine (e.g., gasoline, diesel, natural gas or the like). Alternatively, the vehicle 102 may be propelled by electric machine power, such as, by a battery in addition to or in lieu of the engine. As a few non-limiting examples, the vehicle 102 may be a battery electric vehicle (BEV), a hybrid electric vehicle (HEV), or a fuel-cell electric vehicle (FCEV), or the like. It should be noted that the illustrated system 100 is merely an example, and more, fewer, and/or differently located elements may be used.

As illustrated in Figure 1, the vehicle 102 may include a computing system 104 configured to perform various operations. The computing system 104 may include one or more processors 106 (hereafter "processor 106") configured to perform instructions, commands, and other routines in support of the operations described herein. For instance, the processor 106 may be configured to execute instructions of vehicle applications 108 to provide features such as, for example, navigation, user interaction, and image processing. Such instructions and other data may be maintained in a non-volatile manner using a variety of types of computer-readable storage medium 110. The computer-readable medium 110 (also referred to as a processor-readable medium or storage) includes any non-transitory medium (e.g., tangible medium) that participates in providing instructions or other data that may be read by the processor 106. Computer-executable instructions may be compiled or interpreted from computer programs created using a variety of programming languages and/or technologies, including, without limitation, and either alone or in combination, Java, C, C++, C#, Java Script, Python, or the like.

The computing system 104 may be provided with features allowing the vehicle driver/passengers to interact with the computing system 104. For example, the computing system 104 may receive input from human machine interface (HMI) controls 112 configured to provide for occupant interaction with the vehicle 102. As an example, the computing system 104 may interface with one or more buttons, switches, knobs, or other HMI controls configured to invoke functions on the computing system 104.

The computing system 104 may drive or otherwise communicate with one or more speakers 114 configured to provide audio output and input to vehicle occupants by way of an audio controller 116. The computing system 104 may also drive or otherwise communicate with one or more microphones 118 configured to receive voice input for vehicle occupants by way of the audio controller 116.

The computing system 104 may be further provided with navigation and route planning features through a navigation controller 120. The navigation controller 120 is configured to calculate navigation routes responsive to user input via *e.g.,* the HMI controls 112, and output planned routes and instructions via the speaker 114 and/or the display/projectors (to be discussed in detail below). Location data that is needed for navigation may be collected from a location controller 122 configured to communicate with multiple satellites and calculate the location of the vehicle 102. The location controller 122 may be configured to support various current and/or future global or regional location systems. The regional location systems may include global positioning system (GPS), Galileo, Beidou, Global Navigation Satellite System (GLONASS) and the like. Navigation software and map data used for the navigation function may be stored in the storage 110 as a part of the vehicle applications 108 as well as vehicle data 124.

The computing system 104 may also drive or otherwise communicate with one or more HUD projectors 126 configured to provide visual output to vehicle occupants by way of a video controller 128. As illustrated in Figure 1, the HUD projector 126 may project light onto a windshield 130 of the vehicle 102 to form a transparent/semi-transparent image 132 thereon within a visual field of the driver and/or vehicle user 134 ("vehicle user"). For simplicity, only the head portion of the vehicle user 134 is illustrated in Figure 1. The HUD projector 126 may be implemented in various manners. For instance, the HUD projector 126 may be integrated with a dashboard of the vehicle 102 to project the image 132 onto the windshield 130 at a fixed angle and location. In this case, a transparent or semitransparent reflector film (not shown) may be attached to the windshield at the location corresponding to the projecting location to increase the visibility of the image 132 from the vehicle user's perspective. Alternatively, the HUD projector 126 may be a portable projector that may be moved to customized locations under the windshield 130 based on the preference of the vehicle user 134.

The computing system 104 may also drive or otherwise communicate with one or more displays 135 (e.g., a liquid crystal display (LCD)) configured to provide visual output to vehicle occupants by way of the video controller 128. In some cases, the display 135 may be a touch screen further configured to receive user touch input via the video controller 128, while in other cases the display 135 may be a display only, without input capabilities.

The image 132 as projected by the HUD projector 126 may include information and guidance to assist the vehicle user operating the vehicle 102. As a few non-limiting examples, the image 132 may include information indicative of a vehicle operating status such as speed, driving direction, fuel level or the like. Additionally or alternatively, the image 132 may include information indicative of driving instructions such as navigation instructions provided by the navigation controller 120. Although described as a single unit in the present disclosure, the HUD projector 126 may include various components and parts to enable to the optical projection forming the image 132. For instance, the HUD projector 126 may include one or more of processors, light sources, imagers, reflectors, lenses to facilitate the HUD display operation. The HUD projector 126 may further include one or more wave plates configured to modify the polarization direction of the light projected to the windshield 130.

The HUD projector 126 may be provided with various adjustability to accommodate different usage situations. For instance, the HUD projector 126 may be provided with adjustable light intensity / brightness based on user's input. Additionally or alternatively, the brightness of the image 132 projected by the HUD projector 126 may be automatically adjusted using an ambient light intensity measured by one or more light sensors 136. The light sensors 136 may be mounted inside the vehicle cabin (e.g., on the dashboard) and are configured to provide the ambient light intensity information to the computing system 104. In response to an increased/decreased ambient light intensity measured by the light sensors 136, the computing system 104 and/or the HUD projector 126 may automatically increase or decrease the brightness of the image 132 to provide a consistent user experience to the vehicle user 134.

In some situations, the vehicle user 134 may wear a pair of sunglasses 138 while driving to reduce glare perceived by the vehicle user's eyes. There are various types of sunglasses 138 available in the market. One type of the sunglasses that is particularly relevant to the present disclosure is the polarized sunglasses which applies a polarizer on the lens to filter out light waves oscillating in a predefined direction. For instance, in the case that the sunglasses 138 are vertically polarized (most common), the sunglasses 138 may block light oriented in the horizontal direction (e.g., S-wave, commonly glare) while allowing light that vibrates in the vertical direction (e.g., P-wave) through the lenses. In other words, P-wave light oriented in the vertical direction may be perceived by the vehicle user's eyes unaffected by the vertically polarized lenses while S-wave light oriented in the horizontal direction may be completely or partially blocked by the vertically polarized lenses.

The polarized lenses of the sunglasses 138 may affect the user's perception of HUD image 132 in some cases. The user 134 observes the image 132 by perceiving the image light 140 reflected from the windshield 130. The image light 140 may vibrate in various directions having both a P-wave component and an S-wave component. Since the S-wave component of the image light 140 is blocked by the polarized lenses of the sunglasses 138 and only the P-wave component passes through the lenses, the image 132 may look darker which may make the image 132 hard to observe from the vehicle user's perspective.

Similarly, the display 135 may suffer from the same or similar issues. Light waves emitted from the display 135 (e.g., LCD) may also be polarized having an P-wave component and an S-wave component. The polarized lenses of the sunglasses 138 may block the S-wave component and only allow the P-wave component from emitted from the display 135 to pass through. In the present disclosure, the term "display" is used as a generic term and may be refer to any hardware devices configured to output visual information. The term display may refer to the display 135, the HUD projector 126 and/or other devices not described herein.

To address these issues, the present disclosure proposes a system and method for automatically adjusting (e.g. increase) the brightness of the HUD projection and/or display upon detecting the vehicle user is wearing polarized sunglasses 138.

The computing system 104 may also drive or otherwise communicate with one or more cabin cameras 142 configured to capture images of the vehicle occupants by way of the video controller 128 The camera 142 may be located at a front portion of the vehicle cabin and face inward to capture facial images of the vehicle user 134. For instance, the camera 142 may be attached to or integrated with a center rear-view mirror, or a steering wheel and oriented toward the vehicle user's head to better capture the facial image of the vehicle user 134.

In addition, a polarizer 144 may be coupled to the camera 142 before the camera lens. The polarizer 144 may be attached to the camera 142 in a movable manner via a motion mechanism 145 such that the relative orientation and/or location of the polarizer 144 may be modified with reference to the lens of the camera 142. For instance, the polarizer 144 may be configured to rotate before the camera lens via an electric motor. Details of the motion mechanism 145 will be discussed later. In the present example, the rotating polarizer 144 may interact with the polarized lenses of the sunglasses 138 worn by the user 134 to generate a visual effect of the facial image of the vehicle user 134 from the camera's perspective. For example, when the polarizing direction of the polarizer 144 is parallel to the polarizing direction of the lenses of the sunglasses 138 (e.g., both of which are vertically polarized), the camera 142 may successfully capture regional images of the vehicle user's eyes behind the sunglasses 138. This is because the polarizer 144 is unable to block lights passing through the polarized lens of the sunglasses 138 due to the same polarizing direction. When the polarizer 144 rotates 90° and the polarizing direction is perpendicular to the polarizing direction of the lens of the sunglasses, substantially all of the light passing through sunglasses lens is blocked by the polarizer 144. In this regard, the camera 142 cannot capture the regional images of the vehicle user's eyes behind the sunglasses 138. Through the repetition of the polarizer rotation, the computing system may detect the presents of polarized lenses located before the vehicle user's eyes and thus the determine the vehicle user is wearing polarized sunglasses 138.

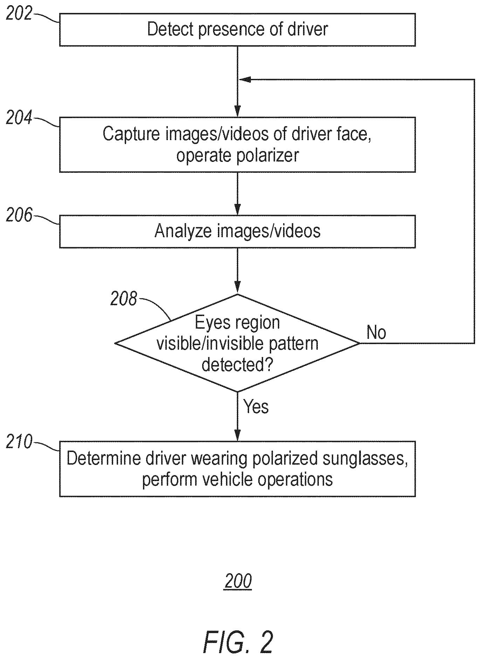

Referring to Figure 2, an example flow diagram of a process 200 for detecting polarized sunglasses worn by the vehicle user is illustrated. With continuing reference to Figure 1, the process 200 may be implemented via the computing system 104 in combination of various components of the vehicle 102. It is noted that, although the following description of the process 200 will be made primarily with reference to the computing system 104 for simplicity, the present disclosure is not limited thereto and the process 200 may be implemented by various other components describe or not described in the present disclosure under essentially the same principle. At operation 202, the computing system 104 detects a presence of the vehicle user 134 on the driver seat. There are multiple methods to make such a detection. For instance, the driver seat may be provided with a pressure sensor (not shown) configured to generate a signal indicative of the seat is occupied upon being depressed. Additionally or alternatively, the computing system 104 may be configured to detect the presence of the vehicle user 134 using the camera 142. The camera 142 may be configured to activate in response to the vehicle being started. Alternatively, the camera 142 may be configured to activate intermittently (e.g., activate 1 second for every 10 seconds) when the vehicle is parked. Additionally or alternatively, the computing system 104 may detect the presence of the vehicle user 134 based on seatbelt signal of the driver seat. Upon detecting that the driver seatbelt has been engaged, the computing system 104 may assume the vehicle user has entered the vehicle 102. Due to the nature of information output via the HUD projector 126, the process 200 is more focused on the vehicle user's perspective of the image 132 over the passenger's perspective. However, the present disclosure is not limited thereto and the computing system 104 may be configured to apply the process 200 to one or more passengers under essentially the same principle.

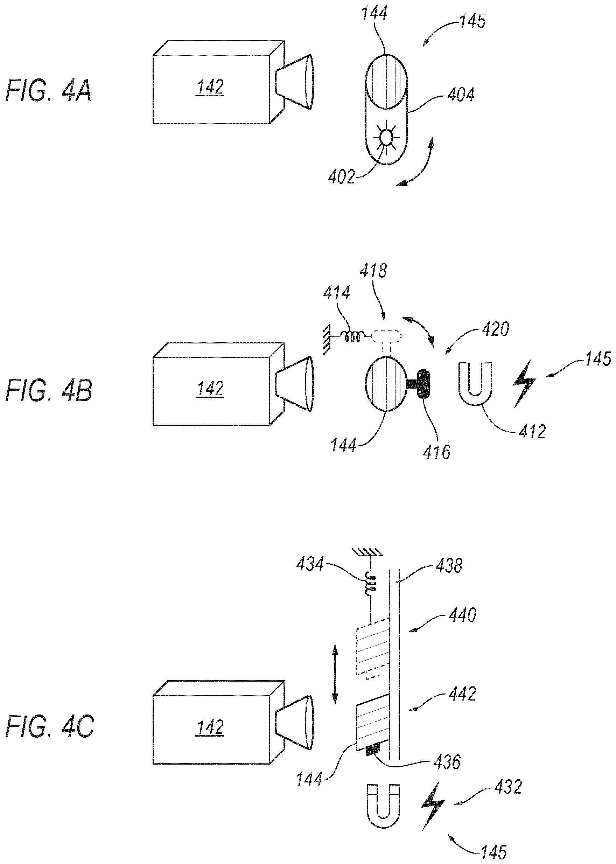

Responsive to detecting the presence of the vehicle user 134, at operation 204, the computing system 104 captures facial images/videos of the vehicle user 134 while the polarizer 144 is being operated by the motion mechanism 145 to adjust the polarization direction of light perceived by the camera 142. There are various methods to implement the motion mechanism 145 associated with the polarizer 144. As discussed above the polarizer 144 may perform an in-plane rotation. Additionally or alternatively, a sliding motion may be applied to the polarizer 144 to change its position relative to camera lens. Detailed examples of the polarizer motion mechanism 145 will be discussed later with reference to Figure 4.

At operation 206, the computing system 104 analyzes the facial images/videos of the vehicle user 134 using facial recognition (e.g., eye tracking) algorithms and software as a part of the vehicle application 108 to determine whether a region of the vehicle user's facial images/video exhibits a repetitive appearing/disappearing pattern based on the direction of the polarizer 144. As discussed above, if the vehicle user 134 is wearing polarized sunglasses 138 (e.g., likely vertically polarized) while operating the vehicle, the motion of the polarizer 144 may repeatedly allow and block the light of the scene behind the polarized sunglasses 138 from the camera's perspective. When polarization direction of the polarizer 144 is parallel to the polarization direction of the sunglasses 138, light from the sunglasses 138 is not blocked by the polarizer 144 and the camera 142 may recognize and track the eyes of the user 134. As the polarization direction of the polarizer 144 is being adjusted and no longer parallel to the polarization direction of the sunglasses 138, the regional images/videos of the eyes of the user 134 behind the sunglasses 138 may be partially or completely blocked by the polarizer 144.

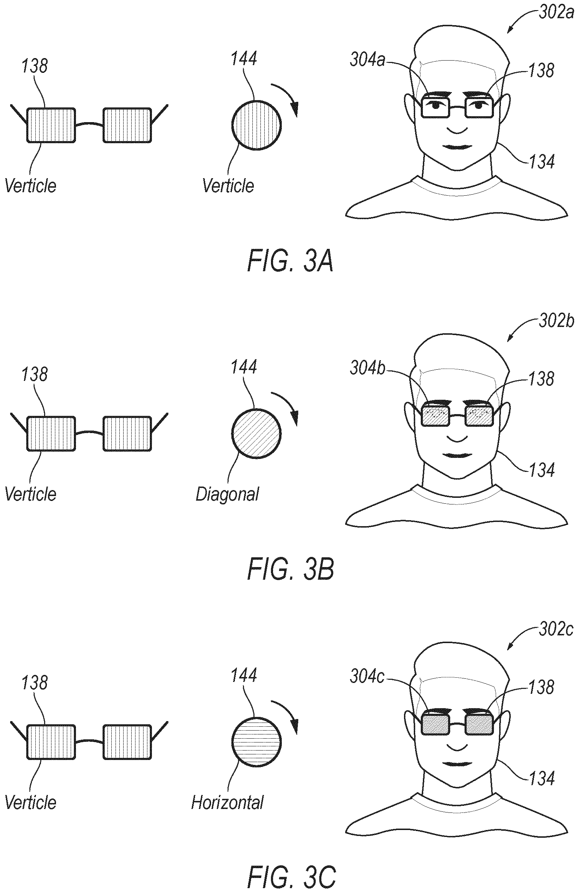

Figures 3A-3C illustrate example diagrams of the facial images perceived by the camera 142 at different polarization angles of one or more embodiments of the present disclosure. In the present example illustrated, the polarizer 144 operates in a clockwise rotating motion for illustrative purposes. In addition, the sunglasses 138 worn by the user 134 are vertically polarized. Figure 3A illustrates a first state in which the polarization direction of the polarizer 144 is in parallel with the polarization direction of the sunglasses 138 (i.e., both vertically polarized). In this state, the polarizer 144 and the sunglasses 138 allow light from each other to pass through. Therefore, the camera 142 may capture a complete facial image 302 of the vehicle user 134 including clear images of the vehicle user eyes region 304a. The computing system 104 may perform image process and recognition processes to recognize the eyes of the user 134 within the facial image 302a.

Referring to Figure 3B, as the polarizer 144 rotates clockwise and the polarization direction is no longer in parallel with the sunglasses 138, the eyes region 304b of the vehicle user's facial image 302b becomes lesser visible while the rest of the facial image remains unchanged. In the present state, the polarizer 144 is diagonal (e.g., 45°) to the polarization direction of the lenses of the sunglasses 138. Therefore, images of the vehicle user eyes region 304b may still be visible but lesser clear compare with the eyes portion 304a in the first facial image 302a.

Referring to Figure 3C, as the polarizer 144 continue to rotate clockwise and the polarization direction is perpendicular (i.e., horizontally polarized) to the lenses of sunglasses 138, images of the vehicle user eyes region 304c of the facial image 302c becomes completely invisible while the rest of the facial image 302c remains visible.

As the polarizer 144 continues to rotate, the camera 142 continues to capture facial images 302 of the vehicle user 134 with the eyes region 304 switching between visible and invisible while the rest of the vehicle user's facial image remains visible. This visible and invisible pattern may be used to determine the presence of the polarized sunglasses 138 worn by the vehicle user 134 by the computing system 104.

Referring back to Figure 2, at operation 208, the computing system 104 determines whether the repeating visible/invisible pattern in the eyes region 304 is present in the facial images/videos 302 over a predefined period of time. The predefined period of time may depend upon the motion speed of the polarizer 144. Taking the continuous rotating polarizer 144 for instance, each visible/invisible cycle (from visible to invisible, and from invisible to visible) occurs at every 90° rotation. Thus a 360° rotation of the polarizer may incur two visible/invisible cycles. As an example, if the polarizer 144 rotates at one rotation per second and the visible/invisible pattern requires at least Four visible/invisible cycles to determine the presence of the polarized sunglasses 138, the predefined period of time may be two seconds.

If the computing system 104 does not detect the visible/invisible pattern in the eye regions 304 within the predefined period of time, indicative of the vehicle user 134 is not wearing polarized sunglasses 138 for the moment being, the process returns to operation 204 and the computing system 104 continues to capture and monitor the facial images/videos of the vehicle user 134.

Otherwise, if the computing system 104 detects the visible/invisible pattern within the predefined period of time, the process proceeds to operation 210. At operation 210, the computing system 104 determines the vehicle user 134 is wearing polarized sunglasses and performs vehicle operations in response to such a determination. The vehicle operations may include various actions. As a few non-limiting examples, the computing system 104 may increase the light intensity of the display 135 and/or the HUD projector 126 to make the image 132 brighter. Additionally or alternatively, the computing system 104 may rotate the orientation of the light projected from the HUD projector (e.g. via the wave plate) to increase the P-wave oriented in the vertical direction that is perceivable through the sunglasses 138. Additionally or alternatively, the computing system 104 may increase the utilization of audio signals in addition to or in lieu of the video image 132 displayed by the HUD projector 126 to communicate with the vehicle user. For instance, responsive to detecting the vehicle user 134 is wearing the polarized sunglasses 138, the computing system 104 may automatically switch on the speaker 114 to output audio messages (e.g. navigation instructions) which otherwise would not be used in addition to the visual display.

Referring to Figures 4A-4C, example diagrams of the polarizer motion mechanism 145 of various embodiments of the present disclosure are illustrated. As discussed above, the motion operation of the polarizer 144 relative to the camera 142 may be implemented in various manners. Figure 4A illustrate one or more embodiments of the motion mechanism 145 implemented via a motor 402 and a belt 404. The motor 402 may be an electric motor powered by a vehicle battery (not shown) and controlled via the computing system 104 and/or the camera 142 individually or collectively. In the present embodiment, the polarizer 144 may be formed in a circular shape and placed before the lens of the camera 142. The belt 404 may have a first end attached to an outer circumference of the polarizer 144 and a second end attached to a pulley of the motor 402 and configured to convey the rotational force from the motor 402 to the polarizer 144. During the operation, the motor 402 outputs the rotational force based on command from the computing system 104 and/or camera 142. As the rotational force reaches the polarizer 144 via the belt 404, the polarizer 144 performs an in-plane rotation and therefore the polarization direction is adjusted. The motor 402 may be configured to continuously rotate in one direction. Alternatively, the motor 402 may output a back and forth rotational force. As an example, the motor 402 may rotate in one direction and stop at a predefined degree (e.g. 90° or more). Then the motor 402 may rotate in the opposite direction for the predefined degree and repeat the back and forth rotations. Due to the nature of the polarization, a 90° rotation should be sufficient for the camera 142 to detect the visible and invisible pattern of the eyes' region 304 of vehicle user's facial image 302. Additionally or alternatively, the polarizer 144 may be connected to the motor 402 via other devices in addition to or in lieu of the belt 404. For instance, one or more gears (not shown) may be used to convey the rotational force from the motor 402 to the polarizer 144.

Figure 4B illustrates one or more embodiments of the motion mechanism 145 of the polarizer 144 implemented via an electromagnet 412. Similar to the one or more embodiments shown in FIG. 4A, the polarizer 144 is formed in a circular shape and performs a back and forth rotational motion while in operation. However, in the present embodiment, the back and forth rotational motion of the polarizer is enabled via the electromagnet 412 and a spring 414. The polarizer 144 may be provided with a metal block 416 attached to the outer circumference aligned with the vertical polarization direction. The spring 414 may have first end connected to a fixture (e.g., the camera 142, or body of the vehicle 102) and a second end connected to the metal block 416. The metal block 416 is attracted to the electromagnet 412 while activated. At an inactive state when the electromagnet 412 is inactive (no magnetic field generated), the tension from the spring 414 urges the metal block 416 (as well as the polarizer) to stay at a first position 418 in which the polarizer 144 is vertical - parallel to the vertically polarized sunglasses 138. When the electromagnet 412 is activated, the current flow through coils of the electromagnet 412 and an electromagnetic field is generated. The electromagnetic field may attract the metal block 416 to generate a force which is calibrated to overcome the tension from the spring 414 such that the metal block 416 rotates the polarizer 144 to a second position 420 at approximately 90° from the first position 418. At the second position 420, the polarizer 144 is horizontally polarized which blocks the vertical vibration light (e.g. P-wave) from the sunglasses 138. When the electromagnet 412 is deactivated, the tension from the spring 414 may urge the metal block 416 (as well as the polarizer 144) to return to the first position. The back and forth rotations of the polarizer 144 may be enabled by switching the electromagnet 412 on and off at a predefined internal (e.g. every a few seconds).

Figure 4C illustrates one or more embodiments of the motion mechanism 145 of the polarizer 144 implemented via an electromagnet 432. Similar to the one or more embodiments shown in FIG. 4B, the motion is enabled by the electromagnet 432 and a spring 434. However, the polarizer 144 slides instead of rotating in the present embodiment. The spring 434 may have first end connected to a fixture (e.g. the camera 142, or body of the vehicle 102) and a second end connected to the a first end (e.g. upper end) of the polarizer 144. The polarizer 144 may be provided with a metal block 436 attached to a second end (e.g., lower end) opposite to the first end. The polarizer 144 may be further attached to a sliding rail 438 and slidable between a first position 440 away from the lens of the camera 142 and a second position 442 before the lens of the camera 142. In the present embodiment, the polarizer 144 may have a fixed horizontal polarization direction which is perpendicular to the most commonly used polarized sunglasses (i.e., vertically polarized). When the electromagnet 432 is inactive, the tension imposed by the spring 434 may urge the polarizer 144 to slide and stay at the first location 440 way from the camera 142. Since the facial image 302 of the vehicle user 134 is not filtered by the polarizer 144, the eyes region 304 of the facial image 302 may be visible to the camera 142. When the electromagnet is activated, the electromagnetic field generated may attract the metal block 436 to overcome the tension imposed by the spring 434 such that the polarizer 144 slides to the second position before the camera 142 to block any vertically vibrating light (e.g., P-wave). Therefore, the eyes portion of the facial image may become invisible to the camera 142. The back and forth rotations of the polarizer 144 may be enabled by switching the electromagnet 432 on and off at a predefined internal (e.g. every a few seconds). Although the sliding rail 438 is vertically oriented in the embodiment, the present disclosure is not limited thereto and the sliding rail 438 may be horizontally orientated under essentially the same concept.

Although the above embodiments are described with reference to polarized sunglasses, the present disclosure is not limited thereto. The present disclosure may be applicable to any eye wears such as prescription glasses, non-prescription glasses, glasses for digital protection, contact glasses and etc. having one or more polarized lens under substantially the same principle.

It is recognized that the controllers as disclosed herein may include various microprocessors, integrated circuits, memory devices (e.g., FLASH, random access memory (RAM), read only memory (ROM), electrically programmable read only memory (EPROM), electrically erasable programmable read only memory (EEPROM), or other suitable variants thereof), and software which co-act with one another to perform operation(s) disclosed herein. In addition, such controllers as disclosed utilize one or more microprocessors to execute a computer-program that is embodied in a non-transitory computer readable medium that is programmed to perform any number of the functions as disclosed. Further, the controller(s) as provided herein includes a housing and the various number of microprocessors, integrated circuits, and memory devices ((e.g., FLASH, random access memory (RAM), read only memory (ROM), electrically programmable read only memory (EPROM), electrically erasable programmable read only memory (EEPROM)) positioned within the housing. The controller(s) as disclosed also include hardware-based inputs and outputs for receiving and transmitting data, respectively from and to other hardware-based devices as discussed herein.

The algorithms, methods, or processes disclosed herein can be deliverable to or implemented by a computer, controller, or processing device, which can include any dedicated electronic control unit or programmable electronic control unit. Similarly, the algorithms, methods, or processes can be stored as data and instructions executable by a computer or controller in many forms including, but not limited to, information permanently stored on non-writable storage media such as read only memory devices and information alterably stored on writeable storage media such as compact discs, random access memory devices, or other magnetic and optical media. The algorithms, methods, or processes can also be implemented in software executable objects. Alternatively, the algorithms, methods, or processes can be embodied in whole or in part using suitable hardware components, such as application specific integrated circuits, field-programmable gate arrays, state machines, or other hardware components or devices, or a combination of firmware, hardware, and software components.

While exemplary embodiments are described above, it is not intended that these embodiments describe all possible forms encompassed by the claims. The words used in the specification are words of description rather than limitation, and it is understood that various changes may be made without departing from the spirit and scope of the disclosure. The words processor and processors may be interchanged herein, as may the words controller and controllers.

As previously described, the features of various embodiments may be combined to form further embodiments of the invention that may not be explicitly described or illustrated. While various embodiments could have been described as providing advantages or being preferred over other embodiments or prior art implementations with respect to one or more desired characteristics, those of ordinary skill in the art recognize that one or more features or characteristics may be compromised to achieve desired overall system attributes, which depend on the specific application and implementation. These attributes may include, but are not limited to strength, durability, marketability, appearance, packaging, size, serviceability, weight, manufacturability, ease of assembly, etc. As such, embodiments described as less desirable than other embodiments or prior art implementations with respect to one or more characteristics are not outside the scope of the disclosure and may be desirable for particular applications.

## Claims

1. A system for a vehicle, comprising:
a display configured to provide a plurality of vehicle operating parameters for a vehicle user;
a camera configured to capture an image indicative of the vehicle user having eye wear positioned on a face of the vehicle user; and
a controller programmed to
adjust an operating characteristic of the display based on at least the vehicle user wearing the eye wear.

2. The system of claim 1, wherein eye wear includes at least one polarized lens.

3. The system of claim 2, further comprising a polarizer adjustably positioned relative to a camera lens of the camera, and the camera is further configured to:
capture the image through the polarizer.

4. The system of claim 3, wherein the controller is further programmed to:
continuously perform an adjustment to the polarizer relative to the camera lens;
identify an eye region of the face of the user in the image; and
responsive to detecting a variation in visibility of the eye region corresponding to the adjustment to the polarizer relative to the camera lens, determine the user is wearing the eye wear.

5. The system of claim 4, wherein the controller further is programmed to perform the adjustment to the polarizer by rotating the polarizer.

6. The system of claim 5, wherein the rotating of the polarizer is continuous in a single direction.

7. The system of claim 5 or 6, wherein the rotating of the polarizer is repetitive in opposite directions of a magnitude of at least 90°.

8. The system of any of claims 4 to 7, wherein controller is further programmed to perform the adjustment to the polarizer by sliding the polarizer to periodically cover the camera lens, such that the visibility of the eye region is greater when the polarizer does not cover the camera lens, and the visibility of the eye region is lesser when the polarizer covers the camera lens.

9. The system of any preceding claim, wherein the display includes at least one of: a head-up display projector, or a liquid crystal display.

10. The system of any preceding claim, wherein the controller is further programmed to:
adjust an operating characteristic of the display by increasing a brightness of the display.

11. A method for a vehicle system, comprising:
outputting, via a display, a plurality of vehicle operating parameters for a user;
capturing, via a camera, an image indicative of the user having a polarized eye wear positioned on a face of the user; and
adjusting, via a controller, an operating characteristic of the display based on at least the user wearing the polarized eye wear.

12. The method of claim 11, further comprising:
adjusting, via a motor, at least one of an orientation or a position of a polarizer relative to a lens of the camera; and
capturing, via the camera, the image through the polarizer.

13. The method of claim 12, further comprising:
adjusting, via the motor, one of:
the orientation of the polarizer by rotating the polarizer continuously in one direction, or by repetitively rotating the polarizer in opposite directions of a magnitude of at least 90°, or
the position of the polarizer by sliding the polarizer to periodically cover the camera lens.

14. The method of claim 12 or 13, further comprising:
identify, via the controller, an eye region of the face of the user in the image; and
responsive to detecting a variation in visibility of the eye region corresponding to the adjusting of the orientation or the position of the polarizer relative to the camera lens, determine, via the controller, the user is wearing the polarized eye wear.

15. The method of any of claims 11 to 14, wherein the display includes at least one of: a head-up display projector, or a liquid crystal display, the method further comprising:
adjusting, via the controller, the operating characteristic of the display by increasing a brightness of the display.
